# EUROPEAN PATENT APPLICATION

(11) **EP 3 553 870 A1**
(43) Date of publication of application: **16.10.2019**
(21) Application number: 16923449.9
(22) Date of filing: 07.12.2016
(51) Int. Cl.: H01M 10/12, H01M 2/28

(54) **LEAD ACID STORAGE BATTERY**

(71) Applicant: Hitachi Chemical Co., Ltd., Chiyoda-ku Tokyo 100-6606 (JP)
(72) Inventor: ARAKI Yuji, Tokyo 100-6606 (JP); HIRANO Takayuki, Tokyo 100-6606 (JP); OKOSHI Tetsuro, Tokyo 100-6606 (JP)
(74) Representative: Hoffmann Eitle
(86) International application number: PCT/JP2016/086435
(87) International publication number: WO 2018/105067

(57) **Abstract**

A lead storage battery according to the present disclosure includes a positive electrode plate having a positive electrode current collector and a positive electrode material filled in the positive electrode current collector, a negative electrode plate having a negative electrode current collector and a negative electrode material filled in the negative electrode current collector, and an electrolytic solution containing sulfuric acid, wherein the negative electrode current collector has a negative electrode ear portion provided on an upper peripheral portion of the negative electrode current collector; the negative electrode ear portion has a surface layer containing Sn; and the ratio (M2/M1) of a mass M2 of the electrolytic solution to the total M1 of a mass of the positive electrode material and a mass of the negative electrode material is 0.7 or higher.

## Description

### Technical Field

The present disclosure relates to a lead storage battery.

### Background Art

Lead storage batteries are, since being excellent in reliability and inexpensive, widely used in the applications such as industrial products and consumer products. In particular, there are a lot of demands for automobiles (so-called, batteries). In recent years, to cope with environmental protection and fuel economy improvement, the developments have been accelerated for start-stop system vehicles (idling stop system vehicles, hereinafter, referred to as "ISS vehicles"), which stop the engines when the vehicles are stopped, and restart the engines when the vehicles are started, and micro-hybrid vehicles such as power generation control vehicles and the like, which reduce power generation of alternators by power of the engines.

Lead storage batteries mounted on ISS vehicles and micro-hybrid vehicles are, due to the following circumstances peculiar to the ISS vehicles and the micro-hybrid vehicles, mainly used in a state of not being fully charged, in other words, in a partial state of charge (PSOC). That is, in the ISS vehicles, the starting and stopping of the engines are frequently repeated. Since a large-current discharge is necessary at starting of the engines, the number of times thereof inevitably increases. In addition to the above circumstance, since alternators using the engines as a power source also stop during stoppage of the engines in the ISS vehicles, the vehicles cannot charge their lead storage batteries. Since even during the stoppage, the electrical equipment (for example, air conditioners) needs electric power supply, and the discharge load increases. Similarly, in the micro-hybrid vehicles, since the amount of electric power generated by alternators become small and the charging of lead storage batteries is carried out intermittently, charge becomes insufficient.

It is known that the case where lead storage batteries are used in a PSOC state has a shorter cycle lifetime than the case of being used in the full state of charge. For example, use of lead storage batteries in a PSOC state brings about the problem of "ear thinning phenomenon", which does not occur in the conventional situation of being used in the full state of charge. This is a phenomenon that the thickness of ear portions (current collecting portions) of negative electrode current collectors reduce with time by such a cause that the ear portions are used for the discharge reaction. When the ear thinning phenomenon occurs, the resistance of the ear portions increases and the performance (for example, charge and discharge characteristics and cycle lifetime) of the lead storage batteries thereby declines. When the ear thinning phenomenon further progresses, the ear portions rupture and this suddenly falls into such a situation that the output from the lead storage batteries cannot be obtained. Such a lifetime mode is referred to also as "sudden end of the lifetime", which is a situation particularly to avoid in vehicular batteries.

Patent Literature 1 discloses that from the viewpoint of suppressing the ear thinning phenomenon of a negative electrode, in a lead storage battery used in a PSOC state, a lead-tin alloy layer is provided on the ear portion of a negative electrode grid, and a negative electrode active material is made to contain a predetermined amount of carbon.

### Citation List

### Patent Literature

Patent Literature 1: International Publication No. WO2010/032782

### Summary of Invention

### Technical Problem

It is conceivable that the technology of Patent Literature 1, since being capable of suppressing ear thinning of a negative electrode current collector, the sudden end of the lifetime due to the ear portion rupture can be retarded. For lead storage batteries to be used in ISS vehicles, micro-hybrid vehicles and the like, however, further lifetime elongation is demanded. From such a viewpoint, the technology of Patent Literature 1 still has room for improvement.

The present disclosure has an object to provide a lead storage battery capable of exhibiting an excellent cycle lifetime performance even in the case of being used mainly in a partial state of charge (PSOC state).

### Solution to Problem

A lead storage battery according to one aspect of the present disclosure includes a positive electrode plate having a positive electrode current collector and a positive electrode material filled in the positive electrode current collector, a negative electrode plate having a negative electrode current collector and a negative electrode material filled in the negative electrode current collector, and an electrolytic solution containing sulfuric acid, wherein the negative electrode current collector has a negative electrode ear portion provided on an upper peripheral portion of the negative electrode current collector; the negative electrode ear portion has a surface layer containing Sn; and the ratio (M2/M1) of a mass M2 of the electrolytic solution to the total M1 of a mass of the positive electrode material and a mass of the negative electrode material is 0.7 or higher. Such a lead storage battery can exhibit an excellent cycle lifetime performance even in the case of being used mainly in a partial state of charge (PSOC state).

By the way, it is known that when lead storage batteries are overcharged, the electrolysis occurs by which water in the electrolytic solution is decomposed into oxygen gas and hydrogen gas. When the electrolysis occurs, since gases (oxygen gas and hydrogen gas) generated by the electrolysis are discharged to the outside of the system, the water content in the electrolytic solution decreases. As a result, the concentration of sulfuric acid in the electrolytic solution increases, and a reduction in the capacity progresses due to the corrosion deterioration of the positive electrode plate, or the like. In addition, if the electrode plate is exposed from the electrolytic solution as the liquid level of the electrolytic solution lowers, such problems arise that the discharge capacity suddenly decreases, and that a connecting portion between the negative electrode plate and a strap or the strap itself corrodes. Even if the electrolytic solution has reduced, the problems do not arise as long as the maintenance of replenishing the battery case with water is carried out. From the viewpoint of decreasing the frequency of the maintenance, however, it is required to suppress the reduction of water in the electrolytic solution. In addition, it has become clear by the findings of the present inventors that also in the lead storage batteries used in PSOC, the electrolysis of the electrolytic solution occurs, and the water content in the electrolytic solution decreases. The cause thereof is not necessarily clear, but in regard to the cause, the present inventors presume that it is a main cause that portions where the active material is in the full state of charge locally exist in the electrode even in PSOC, and the electrolysis of the electrolytic solution occurs in the portions.

In the case where at least one part of the surface of a negative electrode ear portion 32 substantially contains Sn (tin), the lead storage battery can exhibit an excellent cycle lifetime performance and additionally, can effectively suppress the above-mentioned reduction of the electrolytic solution. That is, the lead storage battery according to the present invention is excellent also in the liquid reduction performance (performance to suppress reduction of an electrolytic solution). It is not clear why the lead storage battery can more sufficiently suppress the reduction of the electrolytic solution due to that at least one part of the surface of the negative electrode ear portion 32 substantially contains Sn (tin), but the present inventors presume the cause as follows. That is, the exposure of the lead on the surface of the negative electrode ear portion 32 becomes little, and the formation of local cells then becomes difficult and the electrolysis of the electrolytic solution by the local cell action is suppressed. It is presumed that consequently, the reduction of the electrolytic solution can more sufficiently be suppressed.

In one aspect, the thickness of the negative electrode ear portion is 0.8 mm or larger. In such an aspect, the cycle lifetime performance is likely to be further excellent.

In one aspect, the thickness of the negative electrode ear portion is 1.1 mm or smaller. Such an aspect is preferable from the viewpoint of reduction of production costs, from the viewpoint of the weight reduction of the lead storage battery and from the viewpoint that the molten metal run in cast-on-strapping becomes good to reduce the product defective rate.

In one aspect, the ratio (M2/M1) is lower than 1.0. In such an aspect, the charge acceptability is likely to be excellent. That is, in such an aspect, there are easily simultaneously satisfied both of the excellent cycle lifetime performance and the excellent charge acceptability.

In one aspect, the thickness of the above surface layer is larger than 10 µm. In such an aspect, the cycle lifetime performance is likely to be further excellent.

In one aspect, the thickness of the above surface layer is smaller than 60 µm. Such an aspect is preferable from the viewpoint of the production and from the viewpoint of the reduction of production costs.

In one aspect, the specific gravity of the electrolytic solution is higher than 1.26. In such an aspect, the low-temperature high-rate discharge performance is likely to be excellent. That is, in such an aspect, both of the excellent cycle lifetime performance and the excellent low-temperature high-rate discharge performance are easily simultaneously satisfied.

In one aspect, the specific gravity of the electrolytic solution is lower than 1.29. In such an aspect, the charge acceptability is likely to be excellent. That is, in such an aspect, there are easily simultaneously satisfied both of the excellent cycle lifetime performance and the excellent charge acceptability.

### Advantageous Effects of Invention

According to the present disclosure, there can be provided a lead storage battery capable of exhibiting an excellent cycle lifetime performance even in the case of being used mainly in a partial state of charge (PSOC state). That is, the lead storage battery according to the present disclosure hardly reaches the sudden end of the lifetime even in the case of intermittently repeating being charged, and being discharged in a large current, and of being used in a PSOC state. Further according to the present disclosure, there can be provided a lead storage battery having an excellent liquid reduction performance.

The lead storage battery according to the present disclosure can be used, as a liquid-type lead storage battery in which charge is intermittently carried out and high-rate discharge is carried out in PSOC, suitably in vehicles such as ISS vehicles and micro-hybrid vehicles. According to the present disclosure, an application of the lead storage battery to micro-hybrid vehicles can be provided. According to the present disclosure, an application of the lead storage battery to ISS vehicles can be provided.

### Brief Description of Drawings

[Figure 1] Figure 1 is a perspective view showing a lead storage battery according to an embodiment.
[Figure 2] Figure 2 is a view showing an internal structure of the lead storage battery shown in Figure 1.
[Figure 3] Figure 3 is a perspective view showing one example of an electrode plate group.
[Figure 4] Figure 4 is a front view showing an electrode plate (positive electrode plate or negative electrode plate).
[Figure 5] Figure 5(a) is a cross-sectional view taken along the line V-V of Figure 4, and is the cross-sectional view showing the positive electrode plate; and Figure 5(b) is a cross-sectional view taken along the line V-V of Figure 4, and is the cross-sectional view showing the negative electrode plate.
[Figure 6] Figure 6(a) and Figure 6(b) are front views each showing one example of a current collector (positive electrode current collector or negative electrode current collector).

### Description of Embodiments

In the present description, a term "layer" includes, when observed as a plan view, a structure of a shape formed on a whole area and additionally also a structure of a shape formed on one part. In the present description, a numerical value range indicated by using "to" indicates a range which includes numerical values described before and after "to" as the minimum value and the maximum value, respectively. In numerical value ranges which are described stepwise in the present description, the upper limit value or the lower limit value of a numerical value range in a certain stage may be replaced by the upper limit value or the lower limit value of a numerical value range in another stage. In a numerical value range which is described in the present description, the upper limit value or the lower limit value of the numerical value range may be replaced by a value shown in Examples. "A or B" may include either one of A and B, and may also include both of A and B. Materials which are exemplified in the present description can be used singly or in a combination of two or more, unless otherwise specified. In the present description, when a plurality of substances corresponding to each component exist in a composition, the content of the each component in the composition means the total amount of the plurality of substances existing in the composition, unless otherwise specified. In the present description, the specific gravity, since varying depending on the temperature, is defined as a specific gravity in terms of that at 20°C.

Hereinafter, an embodiment of a lead storage battery according to the present disclosure will be described in detail with reference to the drawings. Here, in all the drawings, the same or corresponding portions shall be denoted by the same reference signs.

### <Lead storage battery>

A lead storage battery according to the present embodiment includes a positive electrode plate having a positive electrode current collector and a positive electrode material filled in the positive electrode current collector, a negative electrode plate having a negative electrode current collector and a negative electrode material filled in the negative electrode current collector, and an electrolytic solution containing sulfuric acid. In such a lead storage battery, the negative electrode current collector has a negative electrode ear portion provided on an upper peripheral portion of the negative electrode current collector; the negative electrode ear portion has a surface layer containing Sn; and the ratio (M2/M1) of a mass M2 of the electrolytic solution to the total M1 of a mass of the positive electrode material and a mass of the negative electrode material is 0.7 or higher. Here, a positive electrode material and a negative electrode material in the present embodiment mean, respectively, a positive electrode material and a negative electrode material after formation (for example, in the full state of charge), and the ratio (M2/M1) of a mass M2 of the electrolytic solution to the total M1 (mass of the electrode materials) of a mass of the positive electrode material and a mass of the negative electrode material means a ratio of a mass of the electrolytic solution after the formation to the total mass of a mass of the positive electrode material after the formation and a mass of the negative electrode material after the formation. In the unformed stage, a material corresponding to the positive electrode material contains a substance to turn to the positive electrode material by the formation, and a material corresponding to the negative electrode material contains a substance to turn to the negative electrode material by the formation.

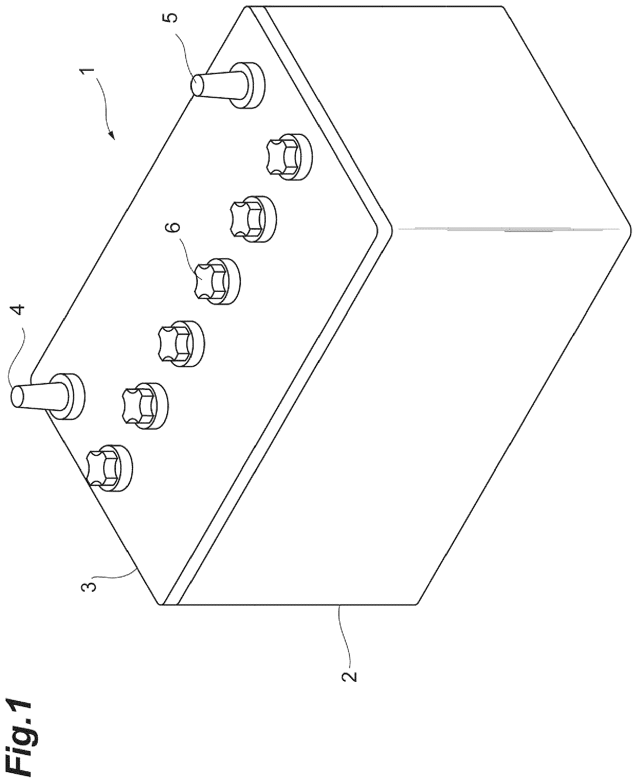

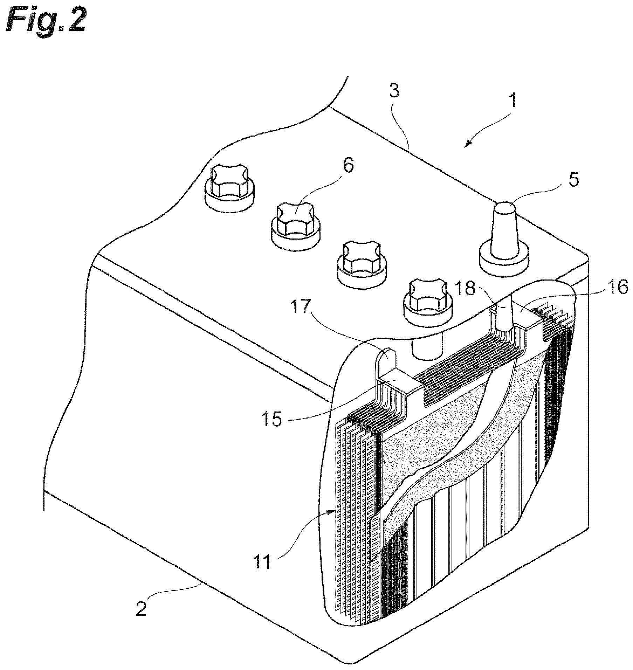

Figure 1 is a perspective view showing a lead storage battery (liquid-type lead storage battery) according to the present embodiment, and Figure 2 is a view showing an internal structure of the lead storage battery 1. As shown in these figures, the lead storage battery 1 has a battery case 2 of which the upper face is opened and in which a plurality of electrode plate groups 11 are housed, and a lid 3 which closes the opening of the battery case 2. The lid 3 is formed, for example, of polypropylene, and has a positive electrode terminal 4, a negative electrode terminal 5, and liquid port plugs 6 which block liquid injection ports provided in the lid 3. An electrolytic solution (not shown in figure) is accommodated in the battery case 2.

Here, the lead storage battery shown in Figure 1 is a liquid-type lead storage battery, but the type of the lead storage battery according to the present disclosure is not especially limited, and may be any different type. The lead storage battery may be, for example, a control valve-type lead storage battery, a sealed lead storage battery or the like. From the viewpoint of production costs and the like, a liquid-type lead storage battery is preferable.

### (Electrode plate group)

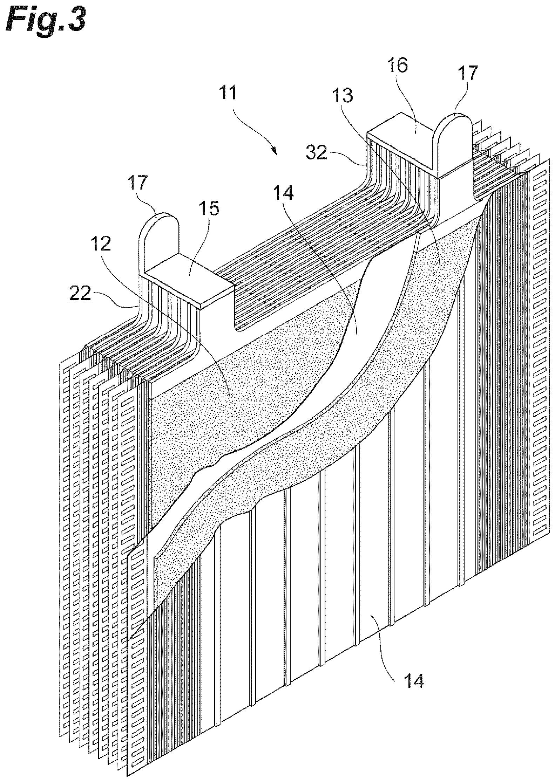

Figure 3 is a perspective view showing an electrode plate group. As shown in Figure 2 and Figure 3, the electrode plate group 11 has, for example, positive electrode plates 12, negative electrode plates 13, separators 14, a positive electrode side strap 15, a negative electrode side strap 16, and a connecting portion 17 between the cells or electrode pole 18. The positive electrode plates 12 and the negative electrode plates 13 are alternately laminated through the separators 14 to thereby constitute the electrode plate group 11. The separator 14 shown in Figure 2 and Figure 3 has a bag-like shape and the negative electrode plates 13 are each disposed in the bag-like separator. Then the separator 14 has, on its one face, a plurality of (a large number of) ridge like ribs extending in the longitudinal direction. Then, the separator 14 may not have a bag-like shape and may have no ribs.

The numbers of the positive electrode plates 12 and the negative electrode plates 13 in the electrode plate group 11 may be, for example, 8 negative electrode plates with respect to 7 positive electrode plates, 8 negative electrode plates with respect to 8 positive electrode plates, or 9 negative electrode plates with respect to 8 positive electrode plates. As the numbers of the positive electrode plates and the negative electrode plates increase, the cycle lifetime performance is likely to be further improved.

### [Electrode plates]

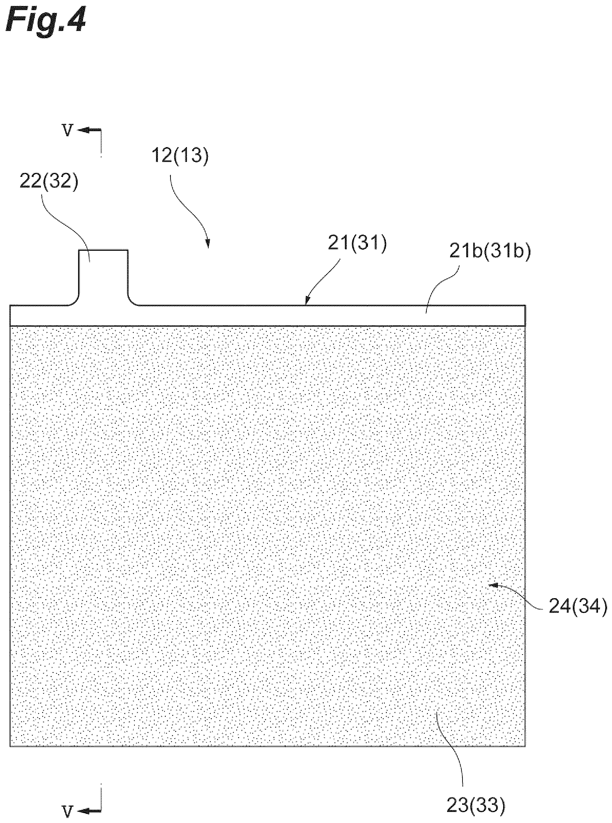

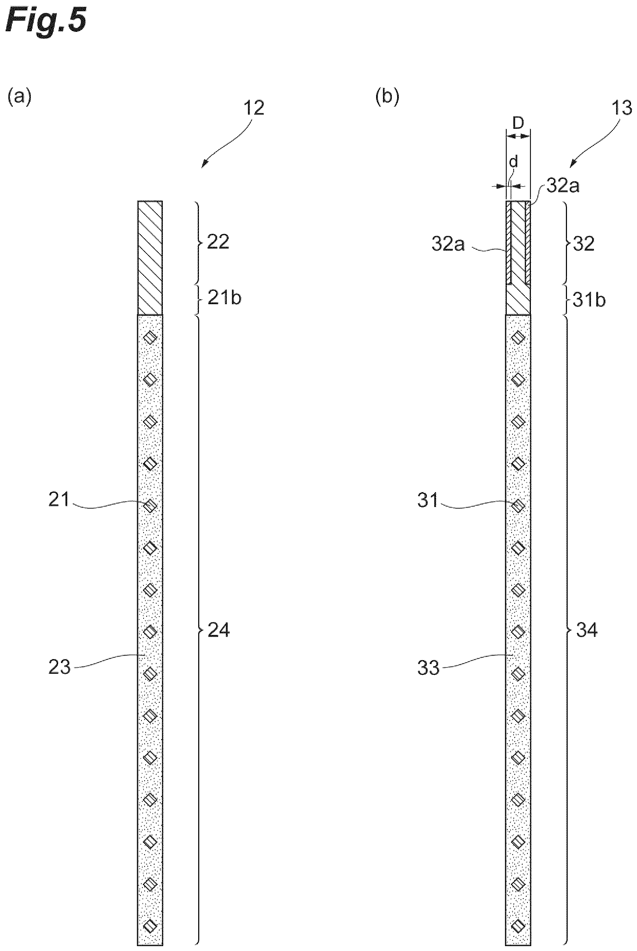

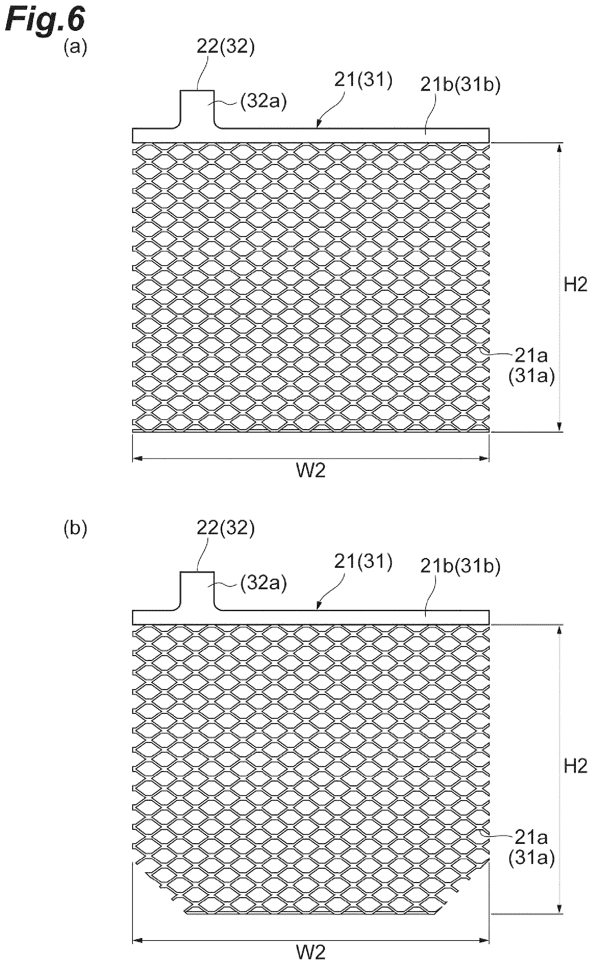

Figure 4 is a front view showing an electrode plate (positive electrode plate 12 or negative electrode plate 13). Figure 5 is cross-sectional views taken along the line V-V of Figure 4, in which Figure 5(a) is an illustration of a cross section of the positive electrode plate 12, and Figure 5(b) is an illustration of a cross section of the negative electrode plate 13. Figure 6 is front views showing current collectors (positive electrode current collector or negative electrode current collector). In Figure 4 and Figure 6, reference signs in parentheses denote the constitution of the negative electrode plate.

As shown in Figure 4, Figure 5(a) and Figure 6, the positive electrode plate 12 has a positive electrode current collector 21, and a positive electrode material 23 filled in the positive electrode current collector 21. The positive electrode material 23 constitutes a positive electrode material filled portion 24. In the positive electrode plate 12, a portion filled with the positive electrode material 23 makes the positive electrode material filled portion 24 (portion hatched in sandy soil-like dots in Figure 4). The positive electrode material filled portion 24 is formed on the front and back faces of the positive electrode plate 12. Usually, the positive electrode material 23 is filled in the whole area of the positive electrode current collector 21, but the positive electrode material 23 does not necessarily need to be filled in the whole area of the positive electrode current collector 21, and there may be portions where the positive electrode material 23 is not filled in a part of the positive electrode current collector 21. In this case, only the portion in the positive electrode current collector 21, where the positive electrode material 23 is filled, makes the positive electrode material filled portion 24, and the portions in the positive electrode current collector 21, where the positive electrode material 23 is not filled, are excluded from the positive electrode material filled portion 24.

The positive electrode current collector 21 has a positive electrode material supporting portion 21a, an upper side frame portion (upper peripheral portion) 21b formed into a belt form on an upper side of the positive electrode material supporting portion 21a, and a positive electrode current collecting portion (positive electrode ear portion) 22 provided on the upper side frame portion 21b. The positive electrode ear portion 22 is provided, for example, in such a way as to partially protrude upward from the upper side frame portion 21b. The external shape of the positive electrode material supporting portion 21a is, for example, a rectangle (oblong or square), and is formed in a grid form. The positive electrode material supporting portion 21a may have such a shape that lower corner portions are cut off as shown in Figure 6(b). The positive electrode current collector 21 constitutes a conduction path of a current from the positive electrode material 23.

The width W2 of the positive electrode current collector 21 is, for example, 10.0 to 16.0 cm. The height H2 of the positive electrode current collector 21 is, for example, 10.0 to 12.0 cm. The thickness (for example, thickness of the positive electrode ear portion) of the positive electrode current collector 21 is, for example, 0.6 to 1.1 mm. Here, in the case where the positive electrode material supporting portion 21a has a shape in which lower corner portions have been cut off, W2 and H2 are calculated assuming that the lower corner portions exist (see Figure 6(b)).

Examples of a composition of the positive electrode current collector 21 include lead-calcium-tin alloys, lead-calcium alloys and lead-antimony alloys. The positive electrode current collector 21 can be obtained by forming these lead alloys into a grid form by a gravity casting method, an expanding method, a punching method or the like. Here, the positive electrode current collector 21 shown in Figure 6 is an expanded grid.

As shown in Figure 4, Figure 5(b) and Figure 6, the negative electrode plate 13 has a negative electrode current collector 31, and a negative electrode material 33 filled in the negative electrode current collector 31. The negative electrode material 33 constitutes a negative electrode material filled portion 34. As in the positive electrode plate 12, in the negative electrode plate 13, a portion filled with the negative electrode material 33 makes the negative electrode material filled portion 34. Details of the negative electrode material filled portion 34 are the same as those of the positive electrode material filled portion 24.

The negative electrode current collector 31 has a negative electrode material supporting portion 31a, an upper side frame portion (upper peripheral portion) 31b formed into a belt form on an upper side of the negative electrode material supporting portion 31a, and a negative electrode current collecting portion (negative electrode ear portion) 32 provided on the upper side frame portion 31b. The negative electrode ear portion 32 is provided, for example, in such a way as to partially protrude upward from the upper side frame portion 31b. The external shape of the negative electrode material supporting portion 31a is, for example, a rectangle (oblong or square), and is formed in a grid form. The negative electrode material supporting portion 31a may have such a shape that lower corner portions are cut off as shown in Figure 6(b). The negative electrode current collector 31 constitutes a conduction path of a current to the negative electrode material 33.

The negative electrode ear portion 32 has a surface layer 32a containing Sn. That is, the surface of the negative electrode ear portion 32 is constituted of the surface layer 32a containing Sn. By making at least a part of the surface of the negative electrode ear portion 32 to substantially contain Sn (tin), the deterioration (ear thinning phenomenon) of the negative electrode ear portion 32 is sufficiently suppressed, whereby the excellent cycle lifetime performance can be achieved. That is, the negative electrode plate 13 having the negative electrode ear portion 32 at least a part of the surface of which contains Sn is useful for providing a long-lifetime lead storage battery which hardly reaches the sudden end of the lifetime in PSOC. The surface layer 32a may contain mainly Pb other than Sn.

The content of Sn is, from the viewpoint that the deterioration (ear thinning) of the negative electrode ear portion 32 is suppressed and the cycle lifetime performance is further excellent, based on the total mass of the surface layer 32a, for example, 4 parts by mass or higher, and may also be 9 parts by mass or higher, 30 parts by mass or higher, or 50 parts by mass or higher. From the viewpoint that the cycle lifetime performance is especially excellent and from the viewpoint of the production, the content may also be 100 parts by mass. Here, in the case where the content of Sn is 100 parts by mass, that is, in the case where the surface layer 32a consists of Sn, the surface layer 32a may contain unavoidable impurities besides Sn. Examples of such impurities include Ag, Al, As, Bi, Ca, Cd, Cu, Fe, Ni, Sb and Zn.

Although there is not altogether clear the reason why by providing the negative electrode ear portion 32 with the surface layer 32a containing Sn, the deterioration (ear thinning phenomenon) or rupture of the negative electrode ear portion 32 is suppressed, the present inventors presume the reason as follows. First, in the case where the lead storage battery is used in a state in which complete charge is not carried out and the charge is insufficient (PSOC state), a stratification phenomenon occurs in which differences in the concentration of dilute sulfuric acid being an electrolytic solution occur between upper parts and lower parts of the electrode plate in the battery. This is because since air bubbles which would be generated from the electrode plate in the case where the complete charge was carried out are not generated in the PSOC state, stirring of the electrolytic solution becomes insufficient. In this case, the concentration of the dilute sulfuric acid becomes higher in the lower parts of the electrode, and the sulfation occurs. The sulfation is such a phenomenon that lead sulfate being a discharge product hardly returns to a charged state. Because of this, when the sulfation occurs, only the upper parts of the electrode come to react intensively. It is presumed that consequently, in the upper parts of the electrode, such deterioration progresses that the connection between the active materials becomes weak, and a charge-discharge reaction progresses also in the ear portion, which is then converted into lead sulfate. It is conceivable that by the mechanism as described above, the dissolution and deposition of lead sulfate are repeated also in the ear portion and the ear thinning or the rupture occurs. It is presumed that by providing the negative electrode ear portion 32 with the surface layer 32a containing Sn, it becomes easy to keep the potential of the surface layer 32a at a state higher than a potential at which the dissolution and deposition of lead sulfate are repeated, whereby the deterioration (ear thinning or rupture) of the negative electrode ear portion 32 is suppressed.

Here, it is preferable that the whole of the negative electrode ear portion 32 is covered with the surface layer 32a, but there may be portions where the surface layer 32a is not provided. For example, the surface layer 32a may be provided only on one principal face in the negative electrode ear portion 32. In the case where there should also be suppressed the deterioration of portions other than the negative electrode ear portion 32 in the negative electrode current collector 31 (for example, upper side frame portion 31b), a surface layer containing Sn may be provided also on the surface of the portions.

The composition in other than the surface layer 32a of the negative electrode current collector 31 may be the same as that of the positive electrode current collector 21. The negative electrode current collector 31 can be fabricated by the same method as that for the positive electrode current collector 21, except, for example, that the surface layer 32a is formed. A method of fabricating the negative electrode current collector 31 may include, for example, a step of fabricating a current collector by the same method as that for the positive electrode current collector 21, and a step of thereafter forming the surface layer 32a on a predetermined position; or may include a step of preparing an alloy plate on which the surface layer 32a is formed beforehand, and a step of working the alloy plate to thereby obtain the current collector.

Examples of a method for forming the surface layer 32a include rolling methods and hot-dip plating methods. The rolling methods are methods of superposing a material (for example, metal plate, alloy plate or the like) on which the surface layer 32a is to be formed, on a material (for example, sheet containing Sn) which is to form the surface layer 32a, and rolling these materials. On the other hand, the hot-dip plating methods are methods of immersing a portion on which the surface layer 32a is to be formed, in a melting basin in which a material (material containing Sn) for forming the surface layer 32a is melted, and plating the portion. In the present embodiment, among these methods, the rolling methods are preferable.

A method of forming the surface layer 32a by using the rolling methods may be, for example, the following method. First, Sn sheets for forming the surface layers 32a are stacked on both surfaces of a plate-form lead alloy (substrate), and rolled by a rolling roller to thereby fabricate a rolled sheet (step of fabricating a rolled sheet). Then, the rolled sheet is expanded by an expander while the position of the rolled sheet is regulated so that the surface layer 32a is formed in a region to become the negative electrode ear portion 32 of the negative electrode current collector 31 (expanding method). Thereby, the negative electrode current collector 31 having the surface layer 32a is obtained. Here, in this rolling method, the thickness of the surface layer 32a can be easily regulated by regulation of the thickness of the alloy to become the substrate, the thickness of the sheet to become the surface layer 32a, and/or the thickness of the sheet after rolling. It is preferable, from the viewpoint of being further excellent in the cycle lifetime performance, that the thickness d of the surface layer 32a is, for example, larger than 10 µm. It is preferable, from the viewpoint of the production and the reduction of production costs, that the thickness d of the surface layer 32a after the rolling is smaller than 60 µm. It is preferable, from these viewpoints, that the thickness d of the surface layer 32a after the rolling is larger than 10 µm and smaller than 60 µm.

It is preferable, from the viewpoint that it becomes difficult for the negative electrode ear portion 32 to be ruptured and the cycle lifetime performance is further excellent, that the thickness D of the negative electrode ear portion 32 is 0.7 mm or larger; and the thickness D may be 0.8 mm or larger, 0.85 mm or larger, 0.90 mm or larger, 0.95 mm or larger or 1.0 mm or larger. It is preferable, from the viewpoint of weight reduction of the lead storage battery, from the viewpoint of reduction of production costs, and from the viewpoint that the molten metal run in cast-on-strapping becomes good to reduce the product defective rate, that the thickness D of the negative electrode ear portion 32 is, for example, 1.1 mm or smaller. It is preferable, from these viewpoints, that the thickness D of the negative electrode ear portion 32 is 0.7 to 1.1 mm; and the thickness D may be 0.8 to 1.1 mm, 0.85 to 1.1 mm, 0.90 to 1.1 mm, 0.95 to 1.1 mm or 1.0 to 1.1mm. Here, the thickness D of the negative electrode ear portion 32 refers to a thickness of the negative electrode ear portion 32 including the thickness d of the surface layer 32a.

The width W2 and the height H2 of the negative electrode current collector 31 may be the same as those of the positive electrode current collector 21, or may not be the same. Here, in the case where the negative electrode material supporting portion 31a has such a shape that lower corner portions are cut off, W2 and H2 are calculated assuming that the lower corner portions exist (see Figure 6(b)).

### (Electrode materials and Electrolytic solution)

### [Positive electrode material]

The positive electrode material 23 contains, for example, a positive electrode active material. The positive electrode material 23 is obtained, for example, by aging and drying a positive electrode material paste containing a substance (raw material of positive electrode active material) to become a positive electrode active material by formation, and forming the resultant. The positive electrode active material include β-lead dioxide (β-PbO₂) and α-lead dioxide (α-PbO₂). Among these lead dioxides, one thereof may be contained in the positive electrode material 23, or both thereof may be contained in the positive electrode material 23. The raw material of the positive electrode active material is not especially limited, and examples thereof include lead powder. Examples of the lead powder include lead powder produced by a ball mill type lead powder producing machine or a Burton-pot type lead powder producing machine (in the ball mill type lead powder producing machine, a mixture of a powder of PbO as a main component and scaly metallic lead). Red lead (Pb₃O₄) may be used as a raw material of the positive electrode active material. The positive electrode material paste may contain, for example, tribasic lead sulfate (raw material of positive electrode active material) as a main component.

The content of the positive electrode active material (based on the total mass of the positive electrode material 23) is, from the viewpoints of being excellent in the low-temperature high-rate discharge performance and the charge acceptability and being further excellent in the cycle lifetime performance, for example, 95% by mass or higher, and may be 97% by mass or higher or 99% by mass or higher. The upper limit of the content of the positive electrode active material may be, for example, 100% by mass. That is, the positive electrode material 23 may substantially consist of the positive electrode active material. Here, the content of the positive electrode active material described here means an amount of the positive electrode active material (having been formed) contained in the positive electrode material 23 (having been formed).

The positive electrode material 23 may further contain additives. Examples of the additives include carbonaceous materials (carbonaceous conductive materials), and short fibers for reinforcement. Examples of the carbonaceous materials include carbon black and graphite. Examples of the carbon black include furnace black (Ketjen black and the like), channel black, acetylene black and thermal black. Examples of the short fibers for reinforcement include acrylic fibers, polyethylene fibers, polypropylene fibers, polyethylene terephthalate fibers and carbon fibers. Here, the carbon fibers described here as the short fibers for reinforcement may be added as the carbonaceous material (carbonaceous conductive material) to the positive electrode material.

### [Negative electrode material]

The negative electrode material 33 contains, for example, a negative electrode active material. The negative electrode material 33 is obtained, for example, by aging and drying a negative electrode material paste containing a substance (raw material of negative electrode active material) to become a negative electrode active material by formation, and forming the resultant. Examples of the negative electrode active materials include spongy lead. The spongy lead is likely to react with sulfuric acid in the electrolytic solution and gradually turn into lead sulfate (PbSO₄). The raw material of the negative electrode active material include lead powder. Examples of the lead powder include lead powder produced, for example, by a ball mill type lead powder producing machine or a Burton-pot type lead powder producing machine (in the ball mill type lead powder producing machine, a mixture of a powder of PbO as a main component and scaly metallic lead). The negative electrode material paste is constituted of, for example, basic lead sulfate, metallic lead and lower oxides.

The content of the negative electrode active material (based on the total mass of the negative electrode material 33) is, from the viewpoints of being excellent in the low-temperature high-rate discharge performance and the charge acceptability and being further excellent in the cycle lifetime characteristics, for example, 93% by mass or higher and may be 95% by mass or higher or 98% by mass or higher. The upper limit of the content of the negative electrode active material may be, for example, 100% by mass. That is, the negative electrode material 33 may substantially consist of the negative electrode active material. Here, the content of the negative electrode active material described here means an amount of the negative electrode active material (having been formed) contained in the negative electrode material 33 (having been formed).

The negative electrode material 33 may contain additives. The additives include resins having at least one group selected from the group consisting of a sulfone group and a sulfonate group (resins having a sulfone group and/or a sulfonate group), and other additives.

The resins having a sulfone group and/or a sulfonate group include bisphenol-based resins having a sulfone group and/or a sulfonate group (hereinafter referred to simply as "bisphenol-based resin"), lignin sulfonic acid and lignin sulfonates. The resins having a sulfone group and/or a sulfonate group, from the viewpoint of improving the charge acceptability, may be the bisphenol-based resins. By making the negative electrode material 33 to contain the bisphenol-based resin, the charge acceptability becomes excellent. Further, the lead storage battery 1 according to the present embodiment, by making the negative electrode material 33 to contain the bisphenol-based resin, becomes further excellent in the cycle lifetime performance.

The negative electrode material may further contain additives. Examples of the additives include barium sulfate, carbonaceous materials (carbonaceous conductive materials), and short fibers for reinforcement. One example of the short fibers for reinforcement includes carbon fibers, which may be added as the carbonaceous materials (carbonaceous conductive materials) to the negative electrode material.

The carbonaceous conductive material is selected preferably from the material group consisting of graphite, carbon black, active carbon, carbon fibers and carbon nanotubes. It is preferable that the content of the carbonaceous conductive material is made to be in the range of 0.1 to 3 parts by mass with respect to 100 parts by mass of the negative electrode active material (spongy metallic lead) in the full state of charge. Preferably, graphite is selected; and more preferably, scaly graphite is selected. The average primary particle diameter of scaly graphite is preferably made to be 100 µm or larger.

The short fibers for reinforcement include acryl fibers, polyethylene fibers, polypropylene fibers, polyethylene terephthalate fibers and carbon fibers.

### [Electrolytic solution]

The electrolytic solution contains sulfuric acid. It is preferable, from the viewpoint that short circuit in overdischarging can be suppressed and from the viewpoint of further excellent in the liquid reduction performance, that the electrolytic solution further contain aluminum ions.

The electrolytic solution containing sulfuric acid and aluminum ions can be obtained, for example, by mixing sulfuric acid and aluminum sulfate (for example, aluminum sulfate powder). The aluminum sulfate to be dissolved in the electrolytic solution can be added as an anhydride or a hydrate.

It is preferable, from the viewpoint of being excellent in the low-temperature high-rate discharge performance, that the specific gravity of the electrolytic solution (for example, electrolytic solution containing aluminum ions) after the formation is, for example, higher than 1.26, and the specific gravity may be 1.265 or higher or 1.27 or higher. It is preferable, from the viewpoint of being excellent in the charge acceptability, that the specific gravity of the electrolytic solution after the formation is lower than 1.29, and the specific gravity may be 1.285 or lower or 1.28 or lower. It is preferable, from these viewpoints, that the specific gravity of the electrolytic solution after the formation is higher than 1.26 and lower than 1.29, and the specific gravity may be 1.265 to 1.285 or 1.26 to 1.28. The value of the specific gravity of the electrolytic solution can be measured, for example, by a floating hydrometer or a digital specific gravity meter manufactured by Kyoto Electronics Manufacturing Co., Ltd.

It is preferable, from the viewpoint of being improved in the charge acceptability, from the viewpoint of being further excellent in the liquid reduction performance and from the viewpoint of being further excellent in the cycle lifetime performance, that the concentration of the aluminum ions in the electrolytic solution is 0.01 mol/L or higher; and being 0.02 mol/L or higher is more preferable and being 0.03 mol/L or higher is still more preferable. It is preferable, from the viewpoint of being improved in the charge acceptability, and from the viewpoint of being further excellent in the cycle lifetime performance, that the concentration of the aluminum ions in the electrolytic solution is 0.2 mol/L or lower; and being 0.15 mol/L or lower is more preferable and being 0.13 mol/L or lower is still more preferable. It is preferable, from these viewpoints, that the concentration of the aluminum ions in the electrolytic solution is 0.01 to 0.2 mol/L; and being 0.02 to 0.15 mol/L is more preferable and being 0.03 to 0.13 mol/L is still more preferable. The aluminum ion concentration of the electrolytic solution can be measured, for example, by ICP atomic emission spectroscopy (radio-frequency inductively coupled plasma atomic emission spectroscopy).

Although the details of the mechanism are not clear by which by making the aluminum ion concentration of the electrolytic solution to be in the above predetermined range, the charge acceptability is improved, it is conceivable that the improvement is attained because in any low SOC, the solubility of the crystalline lead sulfate being a discharge product into the electrolytic solution increases, or the diffusibility of the electrolytic solution into the electrode active material is improved due to a high ionic conductivity of the aluminum ions.

Although the details of the mechanism are not clear by which by making the aluminum ion concentration of the electrolytic solution in the predetermined range, the liquid reduction performance becomes excellent, the present inventors presume the mechanism as follows. When large-current charge is repeated and electrolysis of water in the electrolytic solution is thereby caused, since hydrogen gas is generated due to hydrogen ions existing in the vicinity of the negative electrode, and is discharged to the outside of the battery, water in the electrolytic solution easily reduces. By contrast, when the aluminum ion concentration is in the predetermined range, not only hydrogen ions but also aluminum ions move to the vicinity of the negative electrode during charging. Since due to the influence of the aluminum ions, the number of the hydrogen ions existing in the vicinity of the negative electrode decreases, the reaction potential falls, and the hydrogen generation overvoltage becomes high. It is presumed that for these reasons, when the aluminum ion concentration is in the predetermined range, the liquid reduction performance is excellent (liquid reduction of the electrolytic solution can be suppressed).

There is presumed as follows, further the mechanism by which by making the aluminum ion concentration of the electrolytic solution in the above predetermined range, the cycle lifetime performance is improved. First, in the case of using a usual electrolytic solution containing no aluminum ions, sulfate ions (for example, sulfate ions produced from lead sulfate) supplied to the electrolytic solution during charging go on the surface of an electrode (pole plate or the like) and move downward. In PSOC, since the battery is never fully charged, and stirring of the electrolytic solution by gas generation is not carried out, the above-mentioned stratification phenomenon occurs. That is, whereas the specific gravity of the electrolytic solution in lower parts of the battery becomes high, that in the upper parts of the battery becomes low, thus making the electrolytic solution concentration non-uniform. When such a phenomenon occurs, crystalline lead sulfate which hardly returns to the former state even by being charged is produced, and the reaction area of the active material decreases. The deterioration of the performance is thereby caused in a lifetime test repeating charge and discharge. By contrast, it is conceivable that when the aluminum ion concentration of the electrolytic solution is in the above predetermined range, since the sulfate ions are strongly attracted by the electrostatic attraction force of the aluminum ions, the stratification hardly develops.

### [Ratio (M2/M1) of a mass M2 of the electrolytic solution to a mass M1 of the electrode materials]

The ratio (M2/M1) of a mass M2 of the electrolytic solution to a mass M1 of the electrode materials is 0.7 or higher. It is preferable, from the viewpoint of being further excellent in the cycle lifetime performance, that the ratio (M2/M1) is 0.8 or higher; and being 0.9 or higher is more preferable. It is preferable, from the viewpoint of being excellent in the charge acceptability, that the ratio (M2/M1) is lower than 1.0. It is preferable, from these viewpoints, that the ratio (M2/M1) is 0.7 or higher and lower than 1.0; and being 0.8 or higher and lower than 1.0 is more preferable and being 0.9 or higher and lower than 1.0 is still more preferable. The ratio (M2/M1) can be regulated, for example, by the number of electrode plates, the amounts of the electrode materials filled, the specific gravity of the electrolytic solution, the amount of the electrolytic solution injected, and the like.

The mass M1 of the electrode materials is a mass of the electrode materials in the lead storage battery after the formation (for example, in the full state of charge), and is the total of a mass of the positive electrode material and a mass of the negative electrode material in all the electrode plate groups the lead storage battery has. The mass M1 of the electrode materials can be measured, for example, by the following method. First, all the electrode plate groups are taken out from the lead storage battery after the formation, and separated into every one plate of positive electrode plates and negative electrode plates after the formation. Then, the positive electrode plates and the negative electrode plates are washed with water and thereafter dried. Here, the positive electrode plates are dried in an air atmosphere and the negative electrode plates are dried in a nitrogen atmosphere. After the drying, the masses of all the positive electrode plates and the masses of all the negative electrode plates are measured, and the total thereof is taken to be M1a. Then, the electrode materials (positive electrode material and negative electrode material) are removed from the positive electrode plates and the negative electrode plates after the drying, and thereafter, the resultants were washed with water and dried. After the drying, the masses of all obtained current collectors (positive electrode current collectors and negative electrode current collectors) are measured, and the total thereof is taken to be M1b. A value obtained by subtracting M1b from M1a becomes the mass M1 of the electrode materials.

The mass M2 of the electrolytic solution is a mass of the electrolytic solution in the lead storage battery after the formation (for example, in the full state of charge). The mass M2 of the electrolytic solution can be measured, for example, by the following method. First, the mass of the lead storage battery after the formation is measured, and the measurement value is taken to be M2a. Then, after the electrolytic solution is discharged from the lead storage battery, all the electrode plate groups are taken out from the battery case, and separated into positive electrode plates, negative electrode plates and separators. Then, all the positive electrode plates, negative electrode plates and separators, and the battery case are washed with water, and dried. Here, the positive electrode plates, the separators and the battery case are dried in an air atmosphere, and the negative electrode plates are dried in a nitrogen atmosphere. After the drying, the positive electrode plates, the negative electrode plates and the separators are returned to the battery case, and the mass of the battery (a mass of the lead storage battery after the formation from which the electrolytic solution has been removed) is measured. The measurement value is taken to be M2b. A value obtained by subtracting M2b from M2a becomes the mass M2 of the electrolytic solution.

The proportion of the mass p1 of the positive electrode material in the mass M1 of the electrode materials, and the proportion of the mass n1 of the negative electrode material in the mass M1 of the electrode materials are not especially limited. The ratio (p1/n1) of the mass p1 of the positive electrode material 23 to the mass n1 of the negative electrode material 33 is, from the viewpoint of being further excellent in the cycle lifetime performance, for example, 1.15 or higher, and may be 1.20 or higher, 1.25 or higher, 1.35 or higher or 1.40 or higher. The ratio (p1/n1) is, from the viewpoint that a sufficient battery capacity is easily obtained and from the viewpoint of practical use, for example, 1.60 or lower, and may be 1.45 or lower. The ratio (p1/n1) is, from these viewpoints, for example, 1.15 to 1.60, and may be 1.20 to 1.60, 1.25 to 1.60, 1.35 to 1.60, 1.40 to 1.60, or 1.15 to 1.45, 1.20 to 1.45, 1.25 to 1.45, 1.35 to 1.45 or 1.40 to 1.45. Then, the mass p1 of the positive electrode material 23 and the mass n1 of the negative electrode material 33 described here mean a mass of the positive electrode material 23 after the formation and a mass of the negative electrode material 33 after the formation, respectively.

Although factors are not clear which can attain the further excellent cycle lifetime performance by making the mass ratio p1/n1 in the above range, the present inventors presume the factors as follows. That is, when the mass ratio p1/n1 is in the above range, since it becomes easy for the negative electrode active material to be sufficiently reduced, it becomes easy for the state of charge (SOC) of the lead storage battery to stay in a relatively high range. Consequently, it becomes difficult for the negative electrode ear portion 32 to be converted to lead sulfate. This is presumed to be one factor which can attain the further excellent ISS cycle characteristics.

The proportion of a mass (the total of a mass of the positive electrode active material and a mass of the negative electrode active material) of the electrode active materials in the mass M1 of the electrode materials is, for example, 95% or higher, and may be 97% or higher or 99% or higher. The upper limit of the proportion may be, for example, 100%.

### <Production of the lead storage battery>

A method for producing the lead storage battery 1 according to the present embodiment includes, for example, an electrode plate production step of obtaining electrode plates (positive electrode plate 12 and negative electrode plate 13), and an assembly step of assembling constituent members including the electrode plates to thereby obtain the lead storage battery 1.

In the electrode plate production step, unformed electrode plates (unformed positive electrode plate and unformed negative electrode plate) are obtained, for example, by filling electrode material pastes (positive electrode material paste and negative electrode material paste) in current collectors (for example, current collector grids such as cast grids or expanded grids), and then aging and drying the resultants. The positive electrode material paste contains, for example, a raw material (lead powder and the like) of the positive electrode active material, and may further contain other additives. The negative electrode material paste contains, for example, a raw material (lead powder and the like) of the negative electrode active material, and a resin (bisphenol-based resin or the like) having a sulfone group and/or a sulfonate group, and may further contain other additives.

In the assembly step, electrode plate groups are each obtained, for example, by alternately laminating the unformed negative electrode plate and the unformed positive electrode plate fabricated as described above through a separator, and connecting (welding or otherwise) current collecting portions (ear portions) of same-polarity electrodes to straps. The electrode plate groups are arranged in a battery case to thereby fabricate an unformed battery. Next, after an electrolytic solution (for example, a dilute sulfuric acid) is injected into the unformed battery, the unformed battery is energized with a direct current to carry out formation in the battery case to thereby obtain the lead storage battery 1. Usually, the lead storage battery having a predetermined specific gravity is obtained only by the energization, but for the purpose of shortening the energization time, after the dilute sulfuric acid is once extracted after the formation, an electrolytic solution may be injected.

The formation condition and the specific gravity of the sulfuric acid can be regulated according to properties of the electrode active materials. In addition, the formation treatment is not limited to being carried out after the assembly step, and may be carried out after aging and drying in the electrode production step (tank formation).

Hitherto, the embodiment of the lead storage battery according to the present disclosure has been described, but the present disclosure is not limited to the above embodiment.

### Examples

Then, Examples of the present disclosure will be described. The present disclosure, however, is not limited to the following Examples.

### (Example 1)

### <Fabrication of a lead storage battery>

### [Fabrication of positive electrode plates]

As a positive electrode current collector, there was prepared an expanded grid fabricated by scoring rifts in a plate-form lead-calcium-tin alloy (calcium content: 0.05% by mass, tin content: 0.5% by mass), and stretching the plate so the rifts as to be expanded. To a lead powder fabricated by a ball mill method, 0.07% by mass of acrylic fibers as a short fiber for reinforcement and 0.01% by mass of sodium sulfate were added, and the resultant was dry mixed to thereby obtain a mixture containing the lead powder. The respective amounts of the acrylic fibers and the sodium sulfate blended were amounts blended based on the total mass of the lead powder. Next, 10% by mass of water and 9% by mass of a dilute sulfuric acid (specific gravity: 1.28) were added to the above mixture containing the lead powder, and kneaded to thereby fabricate a positive electrode material paste (the respective amounts of the water and the dilute sulfuric acid blended were amounts blended based on the total mass of lead powder). When the positive electrode material paste was fabricated, the dilute sulfuric acid was added stepwise in order to avoid a rapid temperature rise. Then, the fabricated positive electrode material paste was filled in the above positive electrode current collector, and the current collector filled with the positive electrode material paste was aged in an atmosphere of a temperature of 50°C and a humidity of 98% for 24 hours. Thereby, there were obtained one unformed positive electrode plate in which an unformed positive electrode material was filled in the positive electrode current collector.

### [Fabrication of negative electrode current collectors]

Negative electrode current collectors were fabricated by the following procedure. First, as a substrate, there was prepared a plate-form lead-calcium-tin alloy (calcium content: 0.05% by mass, tin content: 0.5% by mass) of 12 mm in thickness, and as a metallic sheet to form a surface layer, there was prepared tin (Sn) sheets of 0.2 mm in thickness. The tin sheets were stacked on both faces of the tin-calcium-tin alloy so that surface layers consisting of Sn were provided on positions of an ear portion of the negative electrode current collector, and rolled by a rolling roller to thereby fabricate a rolled sheet of 0.8 mm in thickness. The thickness of layers to become the surface layers (surface layers consisting of Sn) formed on the rolled sheet was about 13 µm.

The rolled sheet was expanded by a reciprocating type expander, while the position of the rolled sheet was regulated so that the surface layers consisting of Sn were provided on the positions of the ear portion of the negative electrode current collector. Thereby, there was fabricated one negative electrode current collector (thickness D of the negative electrode ear portion: 0.8 mm) in which the surface layers (thickness: 13 µm) consisting of Sn were formed on the surfaces of the ear portion.

### [Fabrication of negative electrode plates]

As a raw material of a negative electrode active material, a lead powder was used. A mixture containing 0.2% by mass (in terms of solid content) of a bisphenol-based resin (manufactured by Nippon Paper Industries Co., Ltd., trade name: Bisupazu P215), 0.1% by mass of a short fiber for reinforcement (acryl fiber), 1.0% by mass of barium sulfate and 0.2% by mass of a carbonaceous conductive material (furnace black) was added to the above lead powder (the above amounts blended were based on the total mass of the raw material of the negative electrode active material), and thereafter dry mixed. Then, 10% by mass of water (the amount blended was based on the total mass of the raw material of the negative electrode active material) was added and thereafter, the resultant was kneaded. Then, while 9.5% by mass of dilute sulfuric acid of 1.280 in specific gravity (the amount blended was based on the total mass of the raw material of the negative electrode active material) was little by little added, the resultant was kneaded to thereby fabricate a negative electrode material paste. Then, the negative electrode material paste was filled in the negative electrode current collector fabricated in the above method. Then, the current collector filled with the negative electrode material paste was aged in an atmosphere of a temperature of 50°C and a humidity of 98% for 24 hours. Thereafter, the resultant was dried to thereby obtain one unformed negative electrode plate.

### [Assembly of a battery]

Polyethylene-made separators having ribs on the surface were processed into a bag-like shape so that the face having the ribs directed outward, and the unformed negative electrode plates were each inserted in the obtained one bag-like separator. Then, 7 sheets of the unformed positive electrode plates and 8 sheets of the unformed negative electrode plates accommodated in the bag-like separators were alternately laminated so that the ribs of the separators contacted with the unformed positive electrode plates. Then, the current collecting portions (positive electrode ear portions) of the unformed positive electrode plates and the current collecting portions (negative electrode ear portions) of the unformed negative electrode plates were, for respective polarities, collected on and welded to a positive electrode-side strap and a negative electrode-side strap by cast-on strapping to thereby obtain one electrode plate group.

A battery case having 6 cell chambers was prepared, and one electrode plate group was inserted in each of the 6 cell chambers. Then, the electrode plate groups in the cells were connected to each other, and thereafter, a lid was thermally fused to the battery case. Thereafter, each liquid port plug was opened, and a dilute sulfuric acid as an electrolytic solution was injected into each cell from the each liquid injection port provided on the lid. Then, formation in the battery case was carried out by energization with a current of 25 A at an ambient temperature of 40°C for 20 hours to thereby fabricate an 85D23 type battery (lead storage battery) prescribed in JIS D5301. The specific gravity of the electrolytic solution after the formation was regulated at 1.28. The content (based on the total mass of the positive electrode material) of the positive electrode active material after the formation was 99.9% by mass, and the content (based on the total mass of the negative electrode material) of the negative electrode active material after the formation was 98.4% by mass.

### [Calculation of the ratio of a mass M2 of the electrolytic solution to a mass M1 of the electrode materials]

The mass of the lead storage battery after the formation was measured and the measurement value was taken to be M2a. Then, after the electrolytic solution was discharged from the lead storage battery, all the electrode plate groups were taken out from the battery case, and separated into the positive electrode plates, the negative electrode plates and the separators from the respective electrode plate groups. Then, all the positive electrode plates, negative electrode plates and separators were washed with water, and dried. Here, the positive electrode plates and the separators were dried in an air atmosphere, and the negative electrode plates were dried in a nitrogen atmosphere. The battery case was similarly washed with water and dried. The masses of all the positive electrode plates after the drying and the masses of all the negative electrode plates after the drying were measured, and the total of these measurement values was taken to be M1a. The positive electrode plates, the negative electrode plates and the separators after drying were returned to the battery case after the drying, and the mass of the battery (a mass of the lead storage battery after the formation from which the electrolytic solution had been removed) was measured. The measurement value was taken to be M2b. Then, after the electrode materials (the positive electrode material and the negative electrode material) were removed from the positive electrode plates and the negative electrode plates after the drying, the resultants were washed with water and dried. After the drying, the masses of the obtained current collectors (the positive electrode current collectors and the negative electrode current collectors) were measured, and the total of these measurement values was taken to be M1b. The mass M1 of the electrode materials was determined by subtracting M1b from M1a, and the mass M2 of the electrolytic solution was determined by subtracting M2b from M2a. That is, the ratio (M2/M1) of the mass M2 of the electrolytic solution to the mass M1 of the electrode materials was 0.7.

### (Examples 2 to 4)

Lead storage batteries of Examples 2 to 4 were obtained as in Example 1, except for making M2/M1 to be values indicated in Table 1 by regulating the amount of the positive electrode material filled and the amount of the negative electrode material filled. The contents (based on the total mass of the positive electrode material) of the positive electrode active material after the formation in the lead storage batteries of Examples 2 to 4 and the contents (based on the total mass of the negative electrode material) of the negative electrode active material after the formation therein were the same as in Example 1.

### (Examples 5 to 9)

Lead storage batteries of Examples 5 to 9 were obtained as in Example 1, except for, in the fabrication of the negative electrode current collector, carrying out rolling so that the thicknesses D of the negative electrode ear portions (thicknesses of the rolled sheets) and the thicknesses d of the surface layers were made to be values indicated in Table 1. Here, as lead-calcium-tin alloys and metal sheets, the lead-calcium-tin alloy and the metal sheet used in Example 1 were used. The contents (based on the total mass of the positive electrode material) of the positive electrode active material after the formation in the lead storage batteries of Examples 5 to 9 and the contents (based on the total mass of the negative electrode material) of the negative electrode active material after the formation therein were the same as in Example 1.

### (Example 10)

A lead storage battery of Example 10 was obtained as in Example 1, except for making M2/M1 to be a value indicated in Table 1 by regulating the amount of the positive electrode material filled and the amount of the negative electrode material filled, and carrying out rolling so that the thickness D of the negative electrode ear portion (thickness of the rolled sheet) and the thickness d of the surface layer were made to be values indicated in Table 1 in the fabrication of the negative electrode current collector. Here, as a lead-calcium-tin alloy and a metal sheet, the lead-calcium-tin alloy and the metal sheet used in Example 1 were used. The content (based on the total mass of the positive electrode material) of the positive electrode active material after the formation in the lead storage battery of Example 10 and the content (based on the total mass of the negative electrode material) of the negative electrode active material after the formation therein were the same as in Example 1.

### (Comparative Example 1)

A lead storage battery of Comparative Example 1 was obtained as in Example 1, except for using, as the negative electrode current collector, an expanded grid (thickness of the negative electrode ear portion: 0.8 mm) fabricated by expanding a rolled sheet consisting of a lead-calcium-tin alloy (calcium content: 0.05% by mass, tin content: 0.5% by mass). The content (based on the total mass of the positive electrode material) of the positive electrode active material after the formation in the lead storage battery of Comparative Example 1 and the content (based on the total mass of the negative electrode material) of the negative electrode active material after the formation therein were the same as in Example 1.

### (Comparative Examples 2 and 3)

Lead storage batteries of Comparative Examples 2 and 3 were obtained as in Comparative Example 1, except for making M2/M1 to be values indicated in Table 1 by regulating the amount of the positive electrode material filled and the amount of the negative electrode material filled. The contents (based on the total mass of the positive electrode material) of the positive electrode active material after the formation in the lead storage batteries of Comparative Examples 2 and 3 and the contents (based on the total mass of the negative electrode material) of the negative electrode active material after the formation therein were the same as in Example 1.

### (Comparative Example 4)

A lead storage battery of Comparative Example 4 was obtained as in Comparative Example 1, except for using, as the negative electrode current collector, an expanded grid (thickness of the negative electrode ear portion: 0.6 mm) fabricated by expanding a rolled sheet consisting of a lead-calcium-tin alloy (calcium content: 0.05% by mass, tin content: 0.5% by mass). The content (based on the total mass of the positive electrode material) of the positive electrode active material after the formation in the lead storage battery of Comparative Example 4 and the content (based on the total mass of the negative electrode material) of the negative electrode active material after the formation therein were the same as in Example 1.

### (Comparative Example 5)

A lead storage battery of Comparative Example 5 was obtained as in Comparative Example 1, except for using, as the negative electrode current collector, an expanded grid (thickness of the negative electrode ear portion: 1.1 mm) fabricated by expanding a rolled sheet consisting of a lead-calcium-tin alloy (calcium content: 0.05% by mass, tin content: 0.5% by mass). The content (based on the total mass of the positive electrode material) of the positive electrode active material after the formation in the lead storage battery of Comparative Example 5 and the content (based on the total mass of the negative electrode material) of the negative electrode active material after the formation therein were the same as in Example 1.

### <Evaluations of battery characteristics>

For the above lead storage batteries, there were measured as follows the charge acceptability, the low-temperature high-rate discharge performance, the cycle lifetime performance and the liquid reduction performance. The results are shown in Table 1. Here, the evaluation of the liquid reduction performance was carried out only on Example 1 and Comparative Example 1.

### (Charge acceptability)

Fabricated lead storage batteries were each discharged at a constant current of 10.4 A at 25°C for 30 min, and allowed to stand for 12 hours. Thereafter, the lead storage batteries were each charged at a constant voltage of 14.0 V under a limited current of 100 A for 60 sec, and the current value at 5 sec after the initiation of the charging was measured. By comparing the current value, the charge acceptability was evaluated. Here, the charge acceptability was relatively evaluated with the measurement result of Comparative Example 1 being taken as 100.

### [Low-temperature high-rate discharge performance]

The fabricated batteries were regulated at a battery temperature of -15°C, and each discharged at a constant current of 300 A, and the terminal voltages at 30 sec after the initiation of the discharging were measured. By comparing the terminal voltage, the low-temperature high-rate discharge performance was evaluated. Here, the low-temperature high-rate discharge performance was relatively evaluated with the measurement result of Comparative Example 1 being taken as 100.

### [Cycle lifetime performance]

The atmosphere temperature was regulated so that the battery temperature became 25°C. The batteries were subjected to a cycle test in which such an operation was determined to be one cycle that the batteries were discharged at a constant current of 45 A for 59 sec and then discharged at a constant current of 300 A for 1 sec, and thereafter, were charged at a constant-current constant-voltage of 100 A and 14.0 V for 60 sec, and the batteries were allowed to stand for 40 hours after every 3600 cycles and then made to restart the cycles. In this cycle test, since the amount charged was smaller than the amount discharged, if the charging was not completely carried out, the charge gradually became insufficient. As a result, there gradually decreased the voltage at one sec after the discharging at a discharge current of 300 A for one sec. That is, when the negative electrode was polarized in the constant-current constant-voltage charging and switched to the constant voltage charging in an early stage, the charge current decayed and the charge became insufficient. In this lifetime test, the time when the one-second voltage in the 300 A-discharging fell below 7.2 V was determined as a lifetime of the battery, and by comparing the number of the cycles having reached the lifetime, the cycle lifetime performance was evaluated. Here, the cycle lifetime performance was relatively evaluated with the measurement result of Example 1 being taken as 100.

### [Liquid reduction performance]

The liquid reduction performance was evaluated as follows. The battery temperature was regulated at 60°C, and the batteries were charged at a constant voltage of 14.4 V for 42 days (1008 hours). There was taken as a liquid reduction amount, the difference between a weight of the battery when the battery temperature had reached 60°C and right before the constant-voltage charging was carried out and a weight of the battery right after the constant-voltage charging for 42 days finished, and by comparing the amount, the liquid reduction performance was evaluated. The liquid reduction performance was relatively evaluated with the liquid reduction amount of Comparative Example 1 being taken as 100.

**[Table 1]**

| | Negative electrode | | | Electrolytic solution | M2/M1 | Evaluations | | | |
|---|---|---|---|---|---|---|---|---|---|
| | Surface layer composition | Thickness D (mm) | Thickness d (µm) | Specific gravity | | Charge acceptability | Low-temperature high-rate discharge performance | Cycle lifetime performance | Liquid reduction performance |
| Example 1 | Sn | 0.8 | 13 | 1.28 | 0.7 | 100 | 100 | 150 | 89 |
| Example 2 | Sn | 0.8 | 13 | 1.28 | 0.8 | 95 | 105 | 154 | - |
| Example 3 | Sn | 0.8 | 13 | 1.28 | 0.9 | 90 | 109 | 159 | - |
| Example 4 | Sn | 0.8 | 13 | 1.28 | 1 | 86 | 114 | 163 | - |
| Example 5 | Sn | 0.6 | 10 | 1.28 | 0.7 | 95 | 91 | 125 | - |
| Example 6 | Sn | 0.9 | 15 | 1.28 | 0.7 | 103 | 105 | 163 | - |
| Example 7 | Sn | 1.0 | 17 | 1.28 | 0.7 | 105 | 109 | 175 | - |
| Example 8 | Sn | 1.1 | 18 | 1.28 | 0.7 | 108 | 114 | 188 | - |
| Example 9 | Sn | 1.3 | 22 | 1.28 | 0.7 | 112 | 123 | 200 | - |
| Example 10 | Sn | 1.0 | 17 | 1.28 | 0.8 | 100 | 114 | 179 | - |
| Comparative Example 1 | - | 0.8 | - | 1.28 | 0.7 | 100 | 100 | 100 | 100 |
| Comparative Example 2 | - | 0.8 | - | 1.28 | 0.6 | 105 | 95 | 79 | - |
| Comparative Example 3 | - | 0.8 | - | 1.28 | 1 | 86 | 114 | 96 | - |
| Comparative Example 4 | - | 0.6 | - | 1.28 | 0.7 | 95 | 91 | 84 | - |

### Reference Signs List

1 ··· LEAD STORAGE BATTERY, 2 ··· BATTERY CASE, 11 ··· ELECTRODE PLATE GROUP, 12 ··· POSITIVE ELECTRODE PLATE, 13 ··· NEGATIVE ELECTRODE PLATE, 21 ··· POSITIVE ELECTRODE CURRENT COLLECTOR, 23 ··· POSITIVE ELECTRODE MATERIAL, 31 ··· NEGATIVE ELECTRODE CURRENT COLLECTOR, 32 ··· NEGATIVE ELECTRODE CURRENT COLLECTING PORTION (NEGATIVE ELECTRODE EAR PORTION), 32a ··· SURFACE LAYER, 33 ··· NEGATIVE ELECTRODE MATERIAL

## Claims

1. A lead storage battery, comprising:
a positive electrode plate comprising a positive electrode current collector and a positive electrode material filled in the positive electrode current collector;
a negative electrode plate comprising a negative electrode current collector and a negative electrode material filled in the negative electrode current collector; and
an electrolytic solution comprising sulfuric acid,
wherein the negative electrode current collector comprises a negative electrode ear portion provided on an upper peripheral portion of the negative electrode current collector;
the negative electrode ear portion comprises a surface layer comprising Sn; and
a ratio (M2/M1) of a mass M2 of the electrolytic solution to a total M1 of a mass of the positive electrode material and a mass of the negative electrode material is 0.7 or higher.

2. The lead storage battery according to claim 1, wherein a thickness of the negative electrode ear portion is 0.8 mm or larger.

3. The lead storage battery according to claim 1 or 2, wherein a thickness of the negative electrode ear portion is 1.1 mm or smaller.

4. The lead storage battery according to any one of claims 1 to 3, wherein the ratio (M2/M1) is lower than 1.0.

5. The lead storage battery according to any one of claims 1 to 4, wherein a thickness of the surface layer is larger than 10 µm.

6. The lead storage battery according to any one of claims 1 to 5, wherein a thickness of the surface layer is smaller than 60 µm.

7. The lead storage battery according to any one of claims 1 to 6, wherein a specific gravity of the electrolytic solution is higher than 1.26.

8. The lead storage battery according to any one of claims 1 to 7, wherein a specific gravity of the electrolytic solution is lower than 1.29.
